# EUROPÄISCHE PATENTANMELDUNG

(11) **EP 2 886 422 A2**
(43) Veröffentlichungstag der Anmeldung: **24.06.2015**
(21) Anmeldenummer: 14197690.2
(22) Anmeldetag: 12.12.2014
(51) Int. Cl.: B62D 15/02

(54) **Verfahren zum Bestimmen eines aktuellen Lenkwinkels eines Kraftfahrzeugs, Fahrerassistenzeinrichtung und Kraftfahrzeug**

(30) Priorität: 21.12.2013 DE 102013021826
(71) Anmelder: Valeo Schalter und Sensoren GmbH, 74321 Bietigheim-Bissingen (DE)
(72) Erfinder: Bammert, Jens, 74321 Bietigheim-Bissingen (DE); Polmard, Germain, 71636 Ludwigsburg (DE); Heimberger, Marco, 74321 Bietigheim-Bissingen (DE)

(57) **Zusammenfassung**

Die Erfindung betrifft ein Verfahren zum Bestimmen eines aktuellen Lenkwinkels eines Kraftfahrzeugs (1) mittels einer Fahrerassistenzeinrichtung des Kraftfahrzeugs (1) durch Erfassen einer vom Fahrer des Kraftfahrzeugs (1) an einem Lenkrad eingestellten aktuellen Auslenkung von lenkbaren Rädern des Kraftfahrzeugs (1) durch eine Auslenkungserfassungseinrichtung und Bestimmen des aktuellen Lenkwinkels in Abhängigkeit von der aktuellen Auslenkung unter Verwendung einer abgelegten Lenkwinkelübersetzungskennlinie, welche eine Abhängigkeit des Lenkwinkels von der Auslenkung beschreibt, durch ein Steuergerät, wobei die Lenkwinkelübersetzungskennlinie durch das Steuergerät im Betrieb des Kraftfahrzeugs (1) korrigiert wird.

## Beschreibung

Die Erfindung betrifft ein Verfahren zum Bestimmen eines aktuellen Lenkwinkels eines Kraftfahrzeugs mittels einer Fahrerassistenzeinrichtung des Kraftfahrzeugs, wobei eine vom Fahrer an einem Lenkrad eingestellte aktuelle Auslenkung von lenkbaren Rädern des Kraftfahrzeugs durch eine Auslenkungserfassungseinrichtung der Fahrerassistenzeinrichtung erfasst und der aktuelle Lenkwinkel in Abhängigkeit von der aktuellen Auslenkung unter Verwendung einer abgelegten Lenkwinkelübersetzungskennlinie durch ein Steuergerät bestimmt wird, welche eine Abhängigkeit des Lenkwinkels von der Auslenkung beschreibt. Die Erfindung betrifft außerdem eine Fahrerassistenzeinrichtung zum Durchführen eines solchen Verfahrens sowie ein Kraftfahrzeug mit einer derartigen Fahrerassistenzeinrichtung.

Bei heutigen Fahrerassistenzsystemen wird häufig eine Information über die Eigenbewegung des Kraftfahrzeugs benötigt. Um die Eigenbewegung des Kraftfahrzeugs ermitteln zu können, muss der aktuelle Lenkwinkel des Kraftfahrzeugs bekannt sein. Eine besonders genaue Information über den aktuellen Lenkwinkel wird insbesondere dann benötigt, wenn die Eigenbewegung des Fahrzeugs in Abhängigkeit von den Weginformationen zumindest der Räder der Hinterachse, und insbesondere abhängig von jeweiligen Weginformationen aller vier Räder (Vier-Rad-Odometrie) bestimmt werden soll. Die Weginformationen der jeweiligen Räder werden dabei mit Hilfe entsprechender Radsensoren erfasst, welche sogenannte Weggeberimpulse bereitstellen und somit die Anzahl von Umdrehungen bzw. die Radgeschwindigkeit messen.

Üblicherweise wird der aktuelle Lenkwinkel unter Verwendung einer Lenkwinkelübersetzungskennlinie ermittelt, welche die Abhängigkeit des Lenkwinkels von einem Lenkradwinkel oder der Position einer Spurstange beschreibt. Diese Lenkwinkelübersetzungskennlinie wird durch die jeweiligen Fahrzeughersteller ermittelt und in einem Speicher des Fahrzeugs abgelegt und somit für die eingesetzten Fahrerassistenzeinrichtungen zur Verfügung gestellt.

Eine Look-up-Tabelle zur Transformation eines Lenkwinkels in einen Sollkurvenradius ist beispielsweise aus dem Dokument EP 1 390 250 B1 bekannt. Dieser Sollkurvenradius wird als Führungsgröße auf den Eingang eines Reglers geführt, wobei aus Sensordaten ein Istkurvenradius berechnet wird, der als Regelgröße verwendet wird. Als Stellgröße des Reglers wird ein Solllenkwinkel für den Sollkurvenradius verwendet, welcher einer Stelleinrichtung zur Auslenkung der Spurstange zugeführt wird.

Es ist Aufgabe der Erfindung, eine Lösung aufzuzeigen, wie bei einem Verfahren der eingangs genannten Gattung der aktuelle Lenkwinkel des Kraftfahrzeugs anhand der Lenkwinkelübersetzungskennlinie besonders präzise im Betrieb der Fahrerassistenzeinrichtung bestimmt werden kann.

Diese Aufgabe wird erfindungsgemäß durch ein Verfahren, durch eine Fahrerassistenzeinrichtung sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Bestimmen eines aktuellen Lenkwinkels eines Kraftfahrzeugs mittels einer Fahrerassistenzeinrichtung des Kraftfahrzeugs. Eine Auslenkungserfassungseinrichtung der Fahrerassistenzeinrichtung erfasst eine vom Fahrer des Kraftfahrzeugs an einem Lenkrad eingestellte aktuelle Auslenkung von lenkbaren Rädern des Kraftfahrzeugs (beispielsweise erfasster Lenkradwinkel und/oder erfasster Radwinkel und/oder erfasste Position der Spurstange). Ein Steuergerät bestimmt dann den aktuellen Lenkwinkel in Abhängigkeit von der aktuellen Auslenkung der Räder unter Verwendung einer abgelegten Lenkwinkelübersetzungskennlinie, welche eine Abhängigkeit des Lenkwinkels von der Auslenkung beschreibt. Unter dem vom Steuergerät bestimmten Lenkwinkel kann insbesondere ein vom Steuergerät bestimmter Radwinkel verstanden werden, insbesondere Radwinkel für die Vorderräder. Erfindungsgemäß ist vorgesehen, dass die Lenkwinkelübersetzungskennlinie durch das Steuergerät im Betrieb des Kraftfahrzeugs korrigiert bzw. angepasst wird.

Erfindungsgemäß wird demnach eine selbstkalibrierende Lenkwinkelübersetzungskennlinie bereitgestellt, welche im Betrieb des Kraftfahrzeugs fortlaufend angepasst werden kann. Die Erfindung basiert auf mehreren Erkenntnissen: Die Erfindung beruht zunächst auf der Erkenntnis, dass zur Berechnung der Eigenbewegung des Kraftfahrzeugs anhand von Weginformationen zumindest der Räder der Hinterachse, und insbesondere abhängig von Weginformationen aller vier Räder des Kraftfahrzeugs (Vier-Rad-Odometrie), eine sehr genaue Information über den aktuellen Lenkwinkel benötigt wird. Der Erfindung liegt ferner die Erkenntnis zugrunde, dass die von den Fahrzeugherstellern zur Verfügung gestellten Lenkwinkelübersetzungskennlinien, welche zur Bestimmung des Lenkwinkels aus einem Lenkradwinkel und/oder einer Spurstangenposition verwendet werden, relativ ungenau sind bzw. nicht genau genug, um den aktuellen lenkwinkel abhängig von dem Lenkradwinkel und/oder der Spurstangenposition sehr präzise ermitteln zu können. Die Erfindung beruht schließlich auf der Erkenntnis, dass die Nachteile des Stands der Technik dadurch umgangen werden können, dass die Lenkwinkelübersetzungskennlinie im Betrieb der Fahrerassistenzeinrichtung korrigiert, d.h. die Werte der Kennlinie geändert und/oder ergänzt werden. Der Lenkwinkel kann nämlich auch anhand von Sensordaten des Kraftfahrzeugs präzise ermittelt werden, wenn bestimmte Voraussetzungen bezüglich der Fahrdynamik erfüllt sind. Dieser Lenkwinkel kann dann zur Korrektur der Lenkwinkelübersetzungskennlinie verwendet werden. Insgesamt kann der aktuelle Lenkwinkel somit anhand der korrigierten Lenkwinkelübersetzungskennlinie besonders präzise ermittelt werden.

Das Verfahren kann bei einem Kraftfahrzeug mit einer Vorder- und/oder Hinterachslenkung angewendet werden.

Als Auslenkung der lenkbaren Räder wird vorzugsweise ein Lenkradwinkel und/oder ein Radwinkel und/oder eine Position einer Spurstange des Kraftfahrzeugs erfasst. Dazu kann beispielsweise ein Lenkwinkelsensor genutzt werden, welcher üblicherweise in einem Lenkradmodul angeordnet ist. Grundsätzlich kann jedoch als Auslenkung eine beliebige Größe erfasst werden, welche Rückschlüsse auf eine Radwinkelinformation ermöglicht.

Als Lenkwinkelübersetzungskennlinie wird in einer Ausführungsform eine Look-up-Tabelle verwendet. Eine solche Übersetzungstabelle lässt sich ohne viel Aufwand durch das Steuergerät korrigieren, indem die entsprechenden Tabelleneinträge beispielsweise durch neue Werte ersetzt werden.

Hinsichtlich der Verwendung des aktuellen Lenkwinkels können verschiedene Ausführungsformen vorgesehen sein:
In einer Ausführungsform ist vorgesehen, dass durch das Steuergerät ein aktives Lenkungssystem des Kraftfahrzeugs in Abhängigkeit von dem aktuellen Lenkwinkel angesteuert, insbesondere geregelt, wird. Das Steuergerät kann hier einen Regler aufweisen, mittels welchem die Position der Spurstange bzw. die Auslenkung der Räder geregelt wird. Die Ansteuerung des aktiven Lenkungssystems kann somit präzise vorgenommen werden.

Ergänzend oder alternativ kann die Fahrerassistenzeinrichtung als ein Parkassistenzsystem ausgebildet sein, mittels welchem eine Querführung des Kraftfahrzeugs unter Ausgabe von Steuersignalen an das Lenkungssystem in Abhängigkeit von dem aktuellen Lenkwinkel automatisiert durchgeführt wird. Ein solches Parkassistenzsystem detektiert Parklücken, die sich in der Umgebung des Kraftfahrzeugs befinden, und berechnet abhängig von der aktuellen Position des Kraftfahrzeugs relativ zu einer detektierten Parklücke eine Parkbahn, entlang welcher das Kraftfahrzeug kollisionsfrei in die Parklücke eingeparkt werden kann. Beim Einparken wird die Lenkung des Kraftfahrzeugs bzw. die Querführung dann automatisch durch das Parkassistenzsystem gesteuert. Dazu kann die Information über den aktuellen Lenkwinkel genutzt werden, welcher anhand der präzisierten Lenkwinkelübersetzungskennlinie bestimmt werden kann. Die Durchführung von Parkvorgängen kann somit besonders präzise erfolgen. In diesem Zusammenhang kann das Parkassistenzsystem zum Durchführen von semi-autonomen oder aber vollautomatischen Parkvorgängen ausgebildet sein. Bei semi-autonomen Parkassistenzsystemen wird die Querführung des Kraftfahrzeugs durch das System automatisch durchgeführt, während es dem Fahrer zugeteilt wird, Gas zu geben und zu bremsen. Vollautomatische Parkassistenzsysteme übernehmen hingegen zusätzlich auch die Längsführung des Kraftfahrzeugs.

Die Fahrerassistenzeinrichtung kann jedoch auch ein anderes Fahrerassistenzsystem sein. Beispielsweise kann die Fahrerassistenzeinrichtung ein Fahrerassistenzsystem zum semi-autonomen oder autonomen Führen des Kraftfahrzeugs während der Fahrt sein, insbesondere mit entsprechender Sensorik, wie beispielsweise Ultraschall-, Radar-, Laserscanner-, und/oder Kamerasensorik.

Bevorzugt werden für eine Rückwärtsbewegung und eine Vorwärtsbewegung des Kraftfahrzeugs separate Lenkwinkelübersetzungskennlinien bereitgestellt und im Betrieb des Kraftfahrzeugs separat und somit unabhängig voneinander korrigiert. Diese Ausführungsform beruht auf der Erkenntnis, dass bei gegebener Auslenkung, beispielsweise gegebenem Lenkradwinkel, der sich tatsächlich einstellende Lenkwinkel des Kraftfahrzeugs beim Rückwärts- und Vorwärtsbewegung unterschiedlich sein kann. Um dies zu berücksichtigen, können nun zwei separate Lenkwinkelübersetzungskennlinien definiert und unabhängig voneinander auch kalibriert werden. Der Lenkwinkel kann somit für Rückwärts- und Vorwärtsbewegung des Kraftfahrzeugs jeweils höchstpräzise ermittelt und die Lenkung exakt gesteuert werden.

Es erweist sich als vorteilhaft, wenn zur Korrektur der Lenkwinkelübersetzungskennlinie Weginformationen des Kraftfahrzeugs während einer Kurvenfahrt des Kraftfahrzeugs erfasst werden und die Korrektur der Lenkwinkelübersetzungskennlinie abhängig von den Weginformationen erfolgt. Anhand der Weginformationen, welche beispielsweise mit Hilfe entsprechender Radsensoren erfasst werden können, kann bei einer Kurvenfahrt des Kraftfahrzeugs der Lenkwinkel auch unabhängig von der Lenkwinkelübersetzungskennlinie exakt ermittelt werden. Dieser unabhängig von der Kennlinie ermittelte Lenkwinkel kann dann zur Korrektur der Kennlinie genutzt werden. Die Lenkwinkelübersetzungskennlinie kann somit zuverlässig korrigiert werden.

Die Weginformationen werden vorzugsweise separat zumindest für zwei Räder einer gemeinsamen Achse des Kraftfahrzeugs erfasst, insbesondere mittels jeweiliger Radsensoren, durch welche die Anzahl von Umdrehungen des jeweiligen Rades erfasst und sogenannte Weggeberimpulse ausgegeben werden. Die Weginformationen werden dabei bevorzugt separat für die beiden Räder der Hinterachse erfasst. Somit kann der aktuelle Lenkwinkel zur Korrektur der Lenkwinkelübersetzungskennlinie besonders präzise ermittelt und die Kennlinie somit präzisiert werden.

Beim Erfassen der Weginformationen bzw. der durch das jeweilige Rad zurückgelegten Wegstrecke wird vorzugsweise ein Radumfang zumindest eines Rades, insbesondere der jeweilige Radumfang der Räder der gemeinsamen Achse, berücksichtigt. Sind einerseits die Anzahl von Umdrehungen und andererseits auch der Radumfang bekannt, so kann die durch das jeweilige Rad zurückgelegte Wegstrecke ermittelt werden. Ist diese Wegstrecke für die beiden Räder der gemeinsamen Achse, insbesondere der Hinterachse, bekannt, so kann daraus auch der Lenkwinkel ausgerechnet werden.

Um die Genauigkeit beim Erfassen der Weginformationen weiter zu erhöhen, kann der Radumfang durch das Steuergerät im Betrieb der Fahrerassistenzeinrichtung ermittelt werden. Die Ermittlung des Radumfangs kann beispielsweise nach einem Verfahren erfolgen, wie es in dem Dokument EP 1 826 530 B1 beschrieben ist.

Alternativ kann der Radumfang des jeweiligen Rades auch als konstanter Parameter in dem Steuergerät abgelegt sein.

Abhängig von den genannten Weginformationen sowie unter Berücksichtigung einer Spurweite des Kraftfahrzeugs kann mittels eines vorbestimmten Modells, insbesondere des Zweispurmodells, ein Kurvenradius einer durch das Kraftfahrzeug während der Kurvenfahrt befahrenen Kurve bestimmt werden. Die Korrektur der Lenkwinkelübersetzungskennlinie kann dann in Abhängigkeit von diesem Kurvenradius erfolgen. Aus dem Kurvenradius lässt sich nämlich der genaue Lenkwinkel des Kraftfahrzeugs bestimmen, welcher dann unmittelbar zur Korrektur der Lenkwinkelübersetzungskennlinie genutzt werden kann.

Also kann vorgesehen sein, dass abhängig von dem Kurvenradius ein sich während der Kurvenfahrt einstellender Lenkwinkel des Kraftfahrzeugs bestimmt und zur Korrektur der Lenkwinkelübersetzungskennlinie verwendet wird. Die Korrektur der Lenkwinkelübersetzungskennlinie kann derart erfolgen, dass durch diesen Lenkwinkel, welcher sich während der Kurvenfahrt einstellt und abhängig von dem Kurvenradius bestimmt wird, der Lenkwinkelwert der Kennlinie ersetzt wird, welcher der aktuell während der Kurvenfahrt erfassten Auslenkung der Räder zugeordnet ist. Auf diese Art und Weise lässt sich die Lenkwinkelübersetzungskennlinie ohne viel Aufwand korrigieren und enthält stets genaue Lenkwinkelwerte.

Zur Ermittlung des Lenkwinkels abhängig von dem Kurvenradius kann insbesondere das Ackermann-Modell genutzt werden. Die entsprechenden Gleichungen bzw. Beziehungen des Ackermann-Modells können ohne viel Aufwand implementiert werden und ermöglichen eine exakte Bestimmung des Lenkwinkels abhängig von dem Kurvenradius.

Es erweist sich als vorteilhaft, wenn die Korrektur der Lenkwinkelübersetzungskennlinie abhängig von den aktuell erfassten Weginformationen nur unter der Voraussetzung erfolgt, dass während der Kurvenfahrt eine Änderung der erfassten Auslenkung (Lenkradwinkel und/oder Spurstangenposition) zumindest für eine vorgegebene Mindestwegstrecke und/oder eine vorgegebenen Mindestzeitdauer unterhalb eines vorgegebenen Grenzwerts liegt. Für das Verfahren wird somit vorausgesetzt, dass mindestens eine vorgegebene Wegstrecke mit konstantem Lenkwinkel gefahren wird. Dies erhöht die Genauigkeit der Bestimmung des Lenkwinkels und somit der Korrektur der Lenkwinkelübersetzungskennlinie.

Die Erfindung betrifft außerdem eine Fahrerassistenzeinrichtung für ein Kraftfahrzeug, welche zum Durchführen eines erfindungsgemäßen Verfahrens ausgebildet ist.

Ein erfindungsgemäßes Kraftfahrzeug, insbesondere ein Personenkraftwagen, umfasst eine erfindungsgemäße Fahrerassistenzeinrichtung.

Die mit Bezug auf das erfindungsgemäße Verfahren vorgestellten bevorzugten Ausführungsformen und deren Vorteile gelten entsprechend für die erfindungsgemäße Fahrerassistenzeinrichtung sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer Darstellung ein Kraftfahrzeug mit einer Fahrerassistenzeinrichtung gemäß einer Ausführungsform der Erfindung;
- Fig. 2: in schematischer Darstellung eine Fahrsituation des Kraftfahrzeugs zur Erläuterung eines Verfahrens gemäß einer Ausführungsform der Erfindung;
- Fig. 3: ein Flussdiagramm des Verfahrens; und
- Fig. 4: eine beispielhafte Lenkwinkelübersetzungskennlinie.

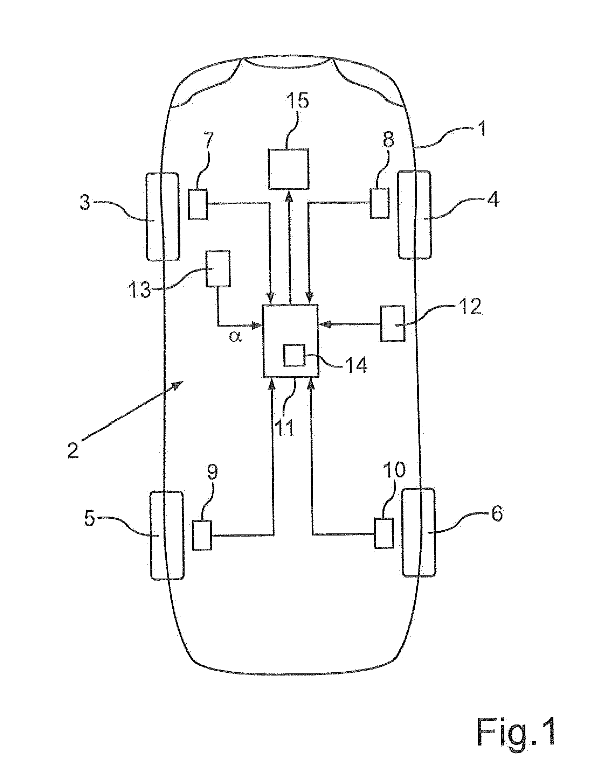

Ein in Fig. 1 dargestelltes Kraftfahrzeug 1 ist beispielsweise ein Personenkraftwagen. Das Kraftfahrzeug 1 beinhaltet eine Fahrerassistenzeinrichtung 2, welche beispielsweise als Parkassistenzsystem ausgebildet ist und zum Durchführen von zumindest semi-autonomen Parkvorgängen des Kraftfahrzeugs 1 dient. Zu jedem Rad 3, 4, 5, 6 beinhaltet das Kraftfahrzeug 1 jeweils einen Radsensor 7, 8, 9, 10, welcher zur Erfassung von Umdrehungen des jeweiligen Rades 3, 4, 5, 6 ausgebildet ist. Die Radsensoren 7, 8, 9, 10 geben sogenannte Weggeberimpulse aus, welche die Anzahl von Umdrehungen des jeweiligen Rades 3, 4, 5, 6 charakterisieren. Diese Weggeberimpulse werden an ein Steuergerät 11 der Fahrerassistenzeinrichtung 2 übermittelt. Das Steuergerät 11 kann auch mit weiteren Sensoren 12 verbunden sein, welche beispielsweise zur Erfassung der Fahrzeuggeschwindigkeit, der Fahrzeugbeschleunigung und weiterer fahrdynamischer Parameter dienen.

Das Steuergerät 11 empfängt weiterhin Messwerte von einer Auslenkungserfassungseinrichtung 13, welche den aktuellen Lenkradwinkel und/oder den aktuellen Radwinkel und/oder die aktuelle Position einer Spurstange der lenkbaren Räder 3, 4 erfasst. Die Auslenkungserfassungseinrichtung 13 übermittelt an das Steuergerät 11 also eine Auslenkung α der lenkbaren, vorderen Räder 3, 4, wobei die Auslenkung α als erfasster Lenkradwinkel und/oder erfasster Radwinkel und/oder als erfasste Spurstangenposition definiert ist.

In einem Speicher 14 des Steuergeräts 11 ist eine Lenkwinkelübersetzungskennlinie in Form einer Look-up-Tabelle abgelegt, welche zur Ermittlung des aktuellen Lenkwinkels des Kraftfahrzeugs 1 aus der aktuellen Auslenkung α dient. In Abhängigkeit von dem aktuellen Lenkwinkel kann das Steuergerät 11 dann die Eigenbewegung des Kraftfahrzeugs 1 ermitteln und unter Berücksichtigung der Eigenbewegung ein aktives Lenkungssystem 15 des Kraftfahrzeugs 1 unter Ausgabe entsprechender Steuersignale ansteuern. Die Ansteuerung erfolgt vorzugsweise derart, dass das Steuergerät 11 die Querführung des Kraftfahrzeugs 1 automatisch durchführt, um das Kraftfahrzeug 1 entlang einer zuvor berechneten Parkbahn in eine ebenfalls zuvor detektierte Parklücke einzuparken. Es kann dabei auch vorgesehen sein, dass für Rückwärtsfahren und Vorwärtsfahren separate Lenkwinkelübersetzungskennlinien abgelegt werden.

In dem Speicher 14 sind außerdem Geometrieparameter des Kraftfahrzeugs 1 abgelegt, wie insbesondere eine Spurweite.

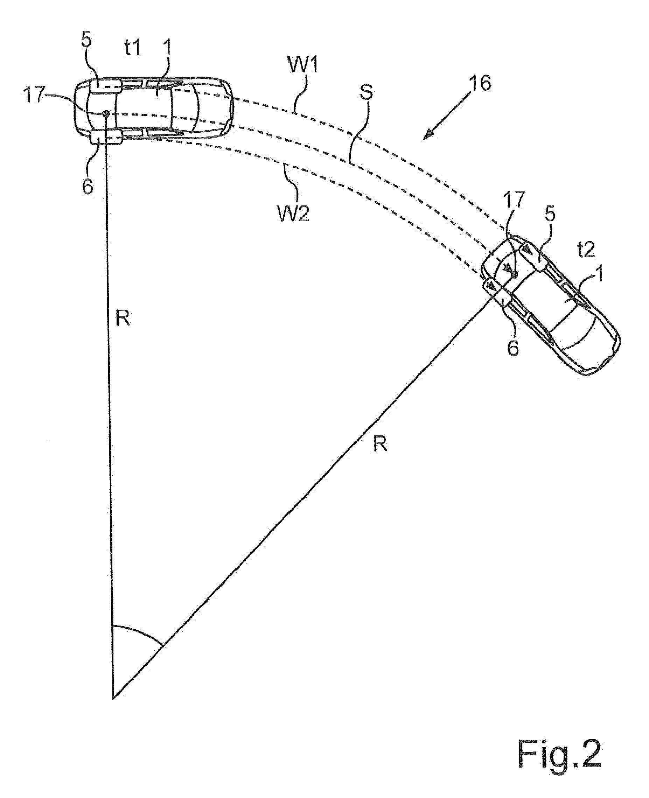

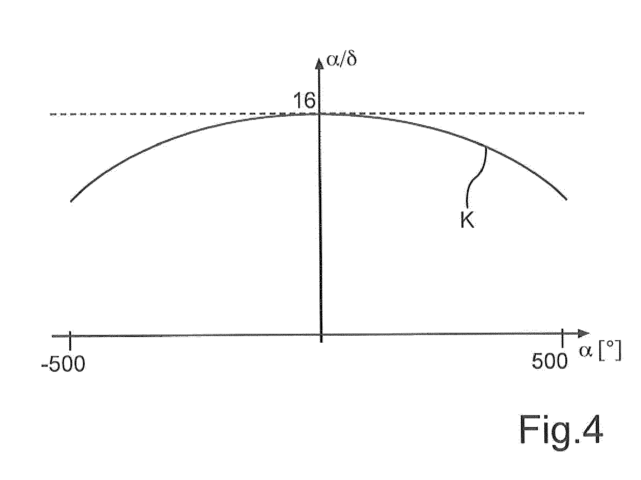

Das Steuergerät 11 ist so eingerichtet, dass es die abgelegte Lenkwinkelübersetzungskennlinie, insbesondere die beiden Kennlinien separat, im Betrieb der Fahrerassistenzeinrichtung 2 korrigieren kann. Eine beispielhafte Lenkwinkelübersetzungskennlinie K ist dabei in Fig. 4 schematisch dargestellt. Sie beschreibt die Abhängigkeit eines Verhältnisses der erfassten Auslenkung α zum Lenkwinkel δ von der Auslenkung α. Ein typischer Wert für das Verhältnis α/δ beträgt 16. Die Korrektur der Lenkwinkelübersetzungskennlinie K erfolgt bei einer Straßensituation, wie sie beispielhaft in Fig. 2 dargestellt ist und bei welcher das Kraftfahrzeug 1 über eine Kurve 16 gefahren wird. Dabei ist das Kraftfahrzeug 1 in Fig. 2 zu zwei verschiedenen Zeitpunkten t1 und t2 gezeigt. Der in Fig. 2 dargestellte Kurvenradius R bezieht sich auf einen Mittelpunkt 17 mittig zwischen den Rädern 5, 6 der hinteren Achse des Kraftfahrzeugs 1. Um die Korrektur der Lenkwinkelübersetzungskennlinie K vorzunehmen, wird vorausgesetzt, dass eine Änderung der erfassten Auslenkung α während der Kurvenfahrt zumindest für eine vorgegebene Mindestwegstrecke und/oder eine vorgegebene Mindestzeitdauer unterhalb eines vorgegebenen Grenzwerts liegt und sich die Auslenkung α somit nicht wesentlich ändert. Während der Kurvenfahrt wird also eine durch das Kraftfahrzeug 1 zurückgelegte Wegstrecke S und/oder eine Zeitdauer t2-t1 erfasst.

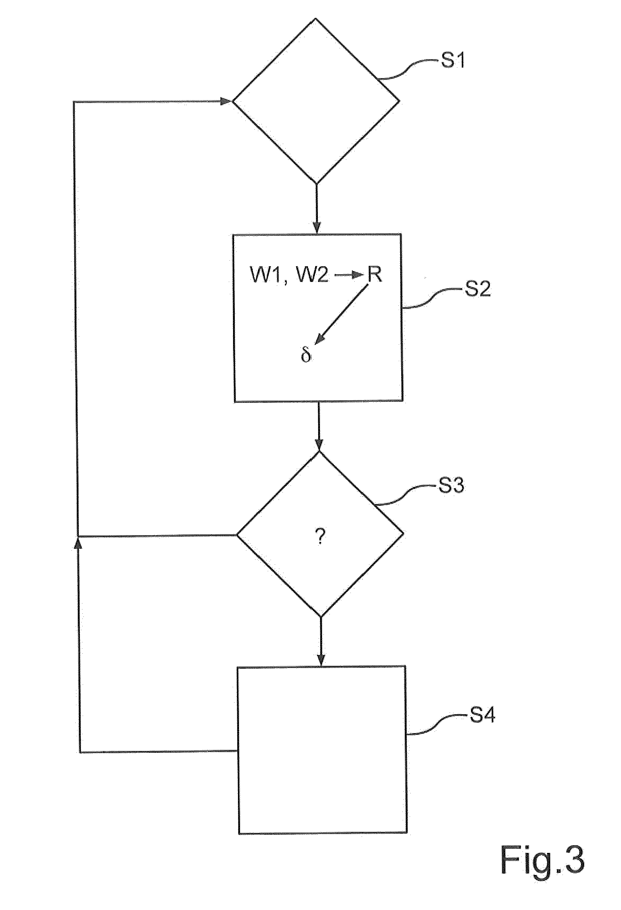

Ein Verfahren zur Korrektur der Lenkwinkelübersetzungskennlinie K wird nachfolgend unter Bezugnahme auf Fig. 3 näher erläutert: Die Lenkwinkelübersetzungskennlinie K für die Rückwärtsbewegung wird dabei beim Rückwärtsfahren korrigiert, die Lenkwinkelübersetzungskennlinie K für die Vorwärtsbewegung beim Vorwärtsfahren. Das Verfahren beginnt in einem Schritt S1, in welchem überprüft wird, ob eine Kurvenfahrt des Kraftfahrzeugs 1 vorliegt. Es wird also vorausgesetzt, dass die aktuelle Auslenkung α in einem vorgegebenen Sollwertebereich liegt bzw. größer als ein Grenzwert ist. Zusätzlich können auch weitere Bedingungen definiert werden, beispielsweise für die aktuelle Fahrzeuggeschwindigkeit und/oder für die aktuelle Gierrate und/oder bezüglich eines automatischen Fahrdynamikregelungssystems (ABS, ESP und dergleichen). Beispielsweise kann vorausgesetzt werden, dass zum aktuellen Zeitpunkt kein automatischer Eingriff des Fahrdynamikregelungssystems vorliegt.

Ist das Kriterium gemäß Schritt S1 erfüllt und liegt eine Kurvenfahrt gemäß Fig. 2 vor, so geht das Verfahren zu einem weiteren Schritt S2 über, in welchem anhand der Weggeberimpulse zumindest der Radsensoren 9, 10 der Räder 5, 6 der hinteren Achse Weginformationen W1, W2 zu den Rädern 5, 6 erfasst werden. Diese Weginformationen W1, W2 beinhalten eine durch das jeweilige Rad 5, 6 während der Kurvenfahrt zurückgelegte Wegstrecke. Diese Wegstrecke W1, W2 wird jeweils abhängig von den Weggeberimpulsen sowie abhängig von dem Radumfang des jeweiligen Rades 5, 6 bestimmt. Der Radumfang kann dabei beispielsweise im Betrieb ermittelt werden.

Die zurückgelegte Wegstrecke W1, W2 wird also separat für die beiden Räder 5, 6 der hinteren Achse erfasst. Optional kann die Wegstrecke auch für die vorderen Räder 3, 4 erfasst werden.

Aus den Weginformationen W1, W2 der Räder 5, 6 wird dann unter Verwendung des Zweispurmodells der Kurvenradius R (vergleiche Fig. 2) ermittelt. Beim Bestimmen des Kurvenradius R wird außerdem auch die Spurweite des Kraftfahrzeugs 1 berücksichtigt, d.h. der Abstand zwischen den beiden Radaufstandspunkten der hinteren Achse. Aus dem Kurvenradius R wird dann der tatsächliche Lenkwinkel δ unter Verwendung des Ackermann-Modells ermittelt. Dieser tatsächliche Lenkwinkel δ unterscheidet sich unter Umständen von demjenigen Lenkwinkelwert, welcher für die aktuelle Auslenkung α in der Lenkwinkelübersetzungskennlinie K angegeben ist.

Das Verfahren geht dann zu einem weiteren Schritt S3, in welchem überprüft wird, ob die bisher erfasste zurückgelegte Wegstrecke S und/oder die Zeitdauer t2-t1 größer als ein vorgegebener Grenzwert ist und sich währenddessen die Auslenkung α nicht signifikant geändert hat. Ist dieses Kriterium nicht erfüllt, kehrt das Verfahren zum Schritt S1 zurück. Ist das Kriterium gemäß Schritt S3 erfüllt, wird in einem weiteren Schritt S4 die Lenkwinkelübersetzungskennlinie K unter Verwendung des ermittelten Lenkwinkels δ korrigiert. Und zwar wird dabei derjenige Lenkwinkelwert der Kennlinie K durch den neu ermittelten Lenkwinkel δ korrigiert, welcher der aktuellen Auslenkung α zugeordnet ist.

## Patentansprüche

1. Verfahren zum Bestimmen eines aktuellen Lenkwinkels (δ) eines Kraftfahrzeugs (1) mittels einer Fahrerassistenzeinrichtung (2) des Kraftfahrzeugs (1) durch:
- Erfassen einer vom Fahrer des Kraftfahrzeugs (1) an einem Lenkrad eingestellten aktuellen Auslenkung (α) von lenkbaren Rädern (3, 4) des Kraftfahrzeugs (1) durch eine Auslenkungserfassungseinrichtung (13) der Fahrerassistenzeinrichtung (2) und
- Bestimmen des aktuellen Lenkwinkels (δ) in Abhängigkeit von der aktuellen Auslenkung (α) unter Verwendung einer abgelegten Lenkwinkelübersetzungskennlinie (K), welche eine Abhängigkeit des Lenkwinkels (δ) von der Auslenkung (α) beschreibt, durch ein Steuergerät (11) der Fahrerassistenzeinrichtung (2),
**dadurch gekennzeichnet, dass**
die Lenkwinkelübersetzungskennlinie (K) durch das Steuergerät (11) im Betrieb des Kraftfahrzeugs (1) korrigiert wird.

2. Verfahren nach Anspruch 1,
**dadurch gekennzeichnet, dass**
als Auslenkung (α) der lenkbaren Räder (3, 4) ein Lenkradwinkel und/oder ein Radwinkel und/oder eine Position einer Spurstange des Kraftfahrzeugs (1) erfasst wird.

3. Verfahren nach Anspruch 1 oder 2,
**dadurch gekennzeichnet, dass**
als die Lenkwinkelübersetzungskennlinie (K) eine Look-up-Tabelle verwendet und korrigiert wird.

4. Verfahren nach einem der vorhergehenden Ansprüche,
**dadurch gekennzeichnet, dass**
für eine Rückwärtsbewegung und eine Vorwärtsbewegung des Kraftfahrzeugs (1) separate Lenkwinkelübersetzungskennlinien (K) bereitgestellt und im Betrieb des Kraftfahrzeugs (1) separat korrigiert werden.

5. Verfahren nach einem der vorhergehenden Ansprüche,
**dadurch gekennzeichnet, dass**
die Fahrerassistenzeinrichtung (2) ein Parkassistenzsystem ist, mittels welchem eine Querführung des Kraftfahrzeugs (1) unter Ausgabe von Steuersignalen an ein Lenkungssystem (15) des Kraftfahrzeugs (1) in Abhängigkeit von dem aktuellen Lenkwinkel (δ) automatisiert durchgeführt wird.

6. Verfahren nach einem der vorhergehenden Ansprüche,
**dadurch gekennzeichnet, dass**
zur Korrektur der Lenkwinkelübersetzungskennlinie (K) Weginformationen (W1, W2) des Kraftfahrzeugs (1) während einer Kurvenfahrt des Kraftfahrzeugs (1) erfasst werden und die Korrektur der Lenkwinkelübersetzungskennlinie (K) abhängig von den Weginformationen (W1, W2) erfolgt.

7. Verfahren nach Anspruch 6,
**dadurch gekennzeichnet, dass**
die Weginformationen (W1, W2) separat für zwei Räder (5, 6) einer gemeinsamen Achse des Kraftfahrzeugs (1), insbesondere mittels jeweiliger Radsensoren (5, 6), erfasst werden.

8. Verfahren nach Anspruch 6 oder 7,
**dadurch gekennzeichnet, dass**
beim Erfassen der Weginformationen (W1, W2) ein Radumfang zumindest eines Rads (3, 4, 5, 6), insbesondere der jeweilige Radumfang der Räder (5, 6) der gemeinsamen Achse, berücksichtigt wird.

9. Verfahren nach Anspruch 8,
**dadurch gekennzeichnet, dass**
der Radumfang durch das Steuergerät (11) im Betrieb der Fahrerassistenzeinrichtung (2) ermittelt wird.

10. Verfahren nach einem der Ansprüche 6 bis 9,
**dadurch gekennzeichnet, dass**
mittels eines vorbestimmten Modells, insbesondere des Zweispurmodells, ein Kurvenradius (R) einer durch das Kraftfahrzeug (1) während der Kurvenfahrt befahrenen Kurve (16) abhängig von den Weginformationen (W1, W2) sowie unter Berücksichtigung einer Spurweite des Kraftfahrzeugs (1) bestimmt wird und die Korrektur der Lenkwinkelübersetzungskennlinie (K) abhängig von dem Kurvenradius (R) erfolgt.

11. Verfahren nach Anspruch 10,
**dadurch gekennzeichnet, dass**
abhängig von dem Kurvenradius (R) ein sich während der Kurvenfahrt einstellender Lenkwinkel (δ) des Kraftfahrzeugs (1) bestimmt und zur Korrektur der Lenkwinkelübersetzungskennlinie (K) verwendet wird.

12. Verfahren nach Anspruch 11,
**dadurch gekennzeichnet, dass**
der Lenkwinkel (δ) anhand des Ackermann-Modells abhängig von dem Kurvenradius (R) bestimmt wird.

13. Verfahren nach einem der Ansprüche 6 bis 12,
**dadurch gekennzeichnet, dass**
die Korrektur der Lenkwinkelübersetzungskennlinie (K) abhängig von den aktuell erfassten Weginformationen (W1, W2) unter der Voraussetzung erfolgt, dass während der Kurvenfahrt eine Änderung der erfassten Auslenkung (α) zumindest für eine vorgegebene Mindestwegstrecke und/oder eine vorgegebene Mindestzeitdauer unterhalb eines vorgegebenen Grenzwerts liegt.

14. Fahrerassistenzeinrichtung (2) zum Bestimmen eines aktuellen Lenkwinkels (δ) eines Kraftfahrzeugs (1), mit:
- einer Auslenkungserfassungseinrichtung (13) zum Erfassen einer vom Fahrer des Kraftfahrzeugs (1) an einem Lenkrad eingestellten aktuellen Auslenkung (α) von lenkbaren Rädern (3, 4) des Kraftfahrzeugs (1) und
- einem Steuergerät (11) zum Bestimmen des aktuellen Lenkwinkels (δ) in Abhängigkeit von der aktuellen Auslenkung (α) unter Verwendung einer abgelegten Lenkwinkelübersetzungskennlinie (K), welche eine Abhängigkeit des Lenkwinkels (δ) von der Auslenkung (α) beschreibt,
**dadurch gekennzeichnet, dass**
das Steuergerät (11) dazu ausgelegt ist, die Lenkwinkelübersetzungskennlinie (K) im Betrieb der Fahrerassistenzeinrichtung (2) zu korrigieren.

15. Kraftfahrzeug (1) mit einer Fahrerassistenzeinrichtung (2) nach Anspruch 14.
